# EUROPÄISCHE PATENTSCHRIFT

(11) **EP 0 809 093 B1**
(45) Veröffentlichungstag und Bekanntmachung des Hinweises auf die Patenterteilung: **10.12.2003**
(21) Anmeldenummer: 97108181.5
(22) Anmeldetag: 20.05.1997
(51) Int. Cl.: G01K 7/18

(54) **Temperatursensor mit einem Messwiderstand**
Temperature sensor with measuring resistor
Capteur de température à résistance de mesure

(30) Priorität: 24.05.1996 DE 19621000
(43) Veröffentlichungstag der Anmeldung: 26.11.1997
(73) Patentinhaber: Heraeus Electro-Nite International N.V., 3530 Houthalen (BE)
(72) Erfinder: Wienand, Karlheinz Dr., 63741 Aschaffenburg (DE); Schlag, Frank, 21073 Hamburg (DE); Damaschke, Gerhard, 65439 Flörsheim (DE)
(74) Vertreter: Kühn, Hans-Christian

(56) Entgegenhaltungen:
- DE-A- 3 111 948
- DE-U- 8 913 803
- GB-A- 2 285 138

## Beschreibung

Die Erfindung betrifft einen Temperatur-Sensor mit einem Meßwiderstand aus einem Substrat mit elektrisch isolierender Oberfläche und darauf befindlicher Widerstandsschicht, wobei der Meßwiderstand von einer Umhüllung aus temperaturbeständigem Kunststoff umgeben ist, durch die Anschlußleiter des Meßwiderstandes geführt sind.

Aus der DT 25 27 739 B2 ist ein Verfahren zur Herstellung eines elektrischen Meßwiderstandes für ein Widerstandsthermometer bekannt, bei dem auf einem Träger aus keramischem Werkstoff ein Platindünnfilm mit vorbestimmtem Temperaturkoeffizienten aufgebracht wird, und der Meßwiderstand anschließend mit einer temperaturbeständigen Deckschicht, beispielsweise aus Epoxidharz versehen ist, um gegen thermische und mechanische Beanspruchungen widerstandsfähig zu sein. Weiterhin soll die Deckschicht einen Schutz gegen Diffusion aus der Gasphase, feste Stoffe aus der Umgebung oder gegen mit dem Meßwiderstand in Kontakt tretende Gegenstände bieten.

Weiterhin ist aus dem deutschen Gebrauchsmuster 89 13 803.1 ein Widerstandsthermometer zur Messung von Oberflächentemperatur bekannt, bei dem ein Metallschichttemperatursensor von einer Kunststoffumhüllung umgeben ist, durch welche die Anschlußleiter des Widerstandsthermometers nach außen geführt sind. Die Kunststoffumhüllung ist in einem Mehrfachplast-Spritzwerkzeug hergestellt und besteht aus Epoxidharz. Der Temperatursensor ist zur direkten Montage auf einer Oberfläche, deren Temperatur zu ermitteln ist, vorgesehen.

Weiterhin ist aus der DE 41 04 674 A1 ist ein Temperatur-Sensor bekannt, bei dem der als Sensor dienende Meßwiderstand durch einen Platindünnschichtwiderstand an der Vorderseite eines plattenförmigen Trägers aus Keramik gebildet ist; dieser ist in ein im wesentlichen rohrförmiges Gehäuse aus Glas druckdicht eingeschlossen, wobei er im wesentlichen nur mit Längskanten spannungsfrei anliegt, während alle übrigen glatten Flächen und Kantenflächen ebenso wie der Meßwiderstand selbst, gegenüber dem Gehäuse vollständig berührungsfrei angeordnet sind. Hierdurch kann der Träger vibrationsfrei umschlossen werden, ohne daß sich eine nennenswerte Verschlechterung des Ansprechsverhaltens ergibt.

Aufgrund der verhältnismäßig genauen Zentrierung bzw. präzisen Ausrichtung des Trägers gegenüber dem Gehäuse ist die Herstellung verhältnismäßig aufwendig.

Weiterhin ist aus dem deutschen Gebrauchsmuster 79 19 142 ein Dünnschichtmeßwiderstand für Temperaturmessungen bekannt, bei dem als Träger ein Keramikplättchen mit einem dünnen Platinüberzug als Widerstandsschicht vorgesehen ist, wobei die Widerstandsschicht elektrisch verbundene Anschlußdrähte aufweist; der Dünnschichtmeßwiderstand ist in einem Keramikgehäuse, das aus zwei Hälften besteht, angeordnet, wobei die Hälften an den Trennflächen mit einem Bindemittel miteinander verschmolzen, bzw. verklebt sind und die vom Meßwiderstand nach außen führenden Anschlußdrähte in das Bindemittel eingebettet sind.

Aufgrund des zweischaligen Gehäuses ist ein verhältnismäßig präziser Aufbau erforderlich

Aus der DE-OS 23 13 756 ist ein Temperatursensor mit Meßwiderstand aus einem Substrat mit elektrisch isolierender Oberfläche und einem darauf befindlichen Meßdraht bekannt; der Meßdraht ist von einer Umhüllung aus temperaturbeständigem Kunststoff umgeben, durch die Anschlußleiter des Meßdrahtes geführt werden, wobei die Umhüllung als Primärgehäuse dient, das zusammen mit dem eingebetteten Meßdraht von einem zusätzlichen Kunststoffgehäuse als Außengehäuse umgeben ist. Dabei stellt die Herstellung eines Meßwiderstandes aus einem Substrat mit darauf befindlichem Meßdraht ein verhältnismäßig aufwendiges Verfahren dar.

Weiterhin ist es aus der JP 55-134 325 (A) bzw. der JP 4-194 628 (A) bekannt, bei TemperaturSensoren eine gas- und flüssigkeitsdichte Kunststoffumhüllung von temperaturempfindlichen Detektoren vorzusehen; aus der DE 29 19 433 ist eine Meßsonde zur Messung der Masse und/oder Temperatur eines strömenden Mediums bekannt, wobei die Widerstandsschicht durch eine dünne, temperaturbeständige Kunststoffolie abgedeckt ist.

Weiterhin ist es aus der DE 44 45 243 A1 bekannt, einen auf einem Keramiksubstrat aufgeschichteten Widerstand als Temperaturfühler mit einer Glas-Schicht zu versehen.

Aufgabe der Erfindung ist es, einen verhältnismäßig einfach herzustellenden Temperatur-Sensor zu schaffen, der kostengünstig hergestellt werden kann und in langlebigen Konsumgütern, wie beispielsweise Waschmaschinen, Trockner, Temperaturregelung in Kraftfahrzeugen einsetzbar ist.

Die Aufgabe wird dadurch gelöst, daß die Umhüllung als Primärgehäuse dient, das zusammen mit dem eingebetteten Meßwiderstand von einer zusätzlichen Kunststoff-Umspritzung als Außengehäuse umgeben ist, wobei die Anschlußleiter durch die Kunststoff-Umspritzung nach außen geführt sind und der Sensor gegenüber der Umgebungsatmosphäre versiegelt ist.

Als besonders vorteilhaft erweist sich der einfache, robuste Aufbau bei optimaler Versiegelung gegenüber der Umgebungsatmosphäre, so daß der Sensor auch in einer aggressiven Umgebung eingesetzt werden kann; darüberhinaus ist er kostengünstig herstellbar.

Vorteilhafte Ausgestaltungen der Erfindung sind in den Ansprüchen 2 bis 7 angegeben.

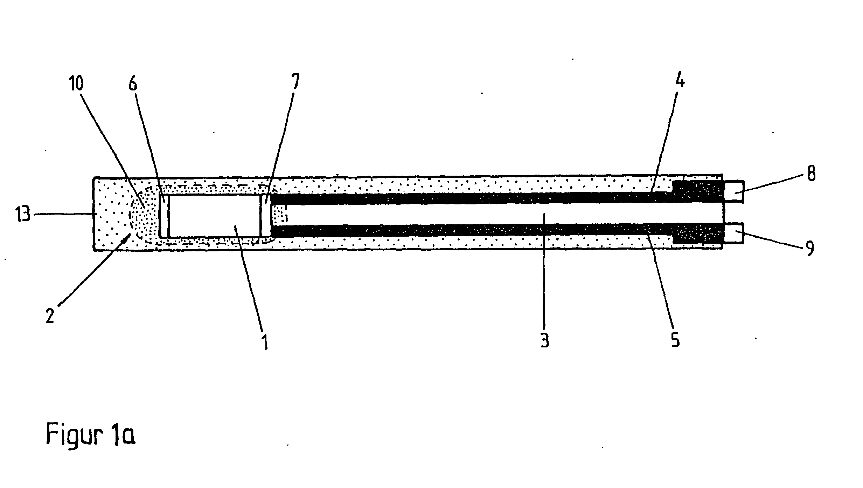

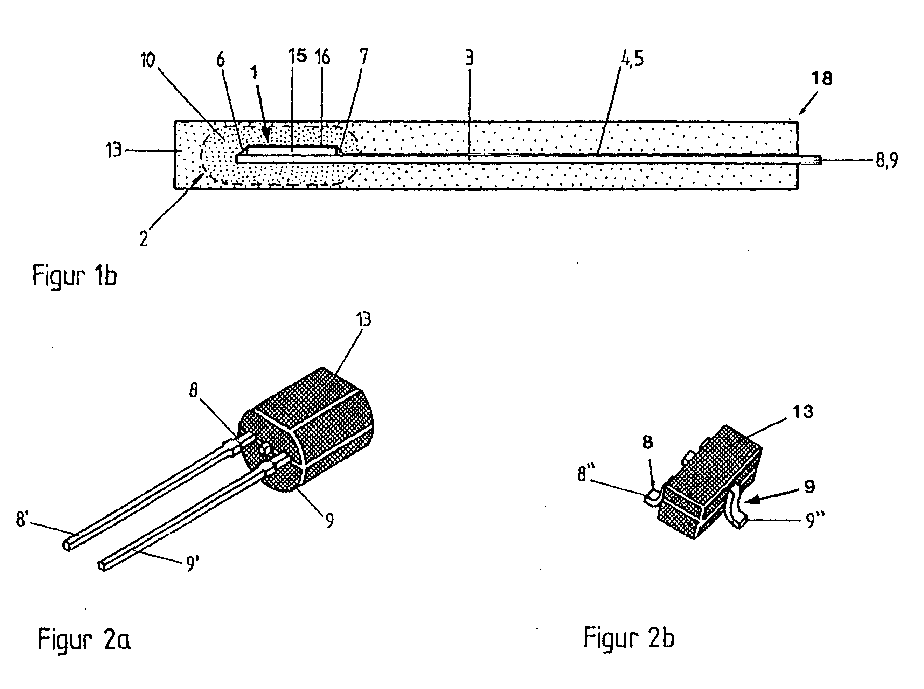

Der Gegenstand der Erfindung wird nachstehend anhand der Figuren 1a, 1b, 2a und 2b näher erläutert.
Figur 1 a zeigt eine Draufsicht eines von oben aufgeschnitten Temperatur-Sensors, bei dem der Meßwiderstand in SMD-Bauweise auf einer Platine aufgebracht ist;
Figur 1 b zeigt den Temperatur-Sensor nach Figur 1 a im Längsschnitt;
Figur 2a und 2b zeigen einen Temperatur-Sensor mit TO-Gehäuse bzw. SOT-Gehäuse und Anschlußkontakten.

Gemäß Figur 1 a ist Meßwiderstand 1 an einem Ende 2 einer langgestreckten Platine 3 angeordnet, und mittels SMD-Verlötung aufgebracht; der Meßwiderstand ist über Anschlußkontakte 6,7 und über Leiterbahnen 4,5 mit äußeren Anschlußkontakten 8,9 des Temperatur-Sensors verbunden. Der Meßwiderstand 1 besteht aus einem plattenförmigem Keramiksubstrat mit elektrisch isolierender Oberfläche, auf der der Meßwiderstand in Form einer Platindünnschicht aufgebracht ist. Wie aus der DE 25 27 739 B 2 bekannt ist, können solche Meßelemente beispielsweise eine mäanderartig gestaltete Widerstandsschicht aufweisen, auf die hier jedoch nicht näher eingegangen werden soll. In der Draufsicht des aufgeschnitten dargestellten Sensors ist die Kunststoff-Umhüllung 10 als versiegelndes Primärgehäuse erkennbar, welche mit einer Durchführungsöffnung für den zu den äußeren Anschlußkontakten 8, 9 führenden Teil der Platine 3 geöffnet ist; die äußeren Anschlußkontakte 8, 9 sind als Stecker ausgebildet. Das aus der Kunststoff-Umhüllung 10 bestehende Primärgehäuse und Platine 3 sind ihrerseits wiederum von einer Kunststoffumspritzung 13 umgeben, wobei die äußeren Anschlußkontakte 8,9 aus dieser sowohl Platine und Meßwiderstand hermetisch abschließenden Kunststoffumspritzung 13 als Steckkontakte herausragen. Meßwiderstand 1 ist im Bereich der Anschlußkontakte 6,7 direkt auf die jeweiligen Leiterbahnen 4,5 der Platine 3 aufgelötet.

Anhand des Längsschnitts gemäß Figur 1 b ist Meßwiderstand 1 im Längsschnitt erkennbar, dessen Substrat 15 als plattenförmiges Keramikteil ausgebildet ist, welches zumindestens im Oberflächen-Bereich zur Widerstandsschicht 16 elektrisch isolierend ausgebildet ist. Die Widerstandsschicht 16 weist an den sich gegenüberliegenden Enden die Anschlußkontakte 6,7 auf, welche jeweils direkt auf Leiterbahnen 4,5 der Platine 3 gegenseitig elektrisch isolierend aufgelötet sind. So ist beispielsweise Anschlußkontakt 6 mit Leiterbahn 4 durch Löten elektrisch und mechanisch fest verbunden, Anschlußkontakt 7 entsprechend mit Leiterbahn 5. Meßwiderstand 1 ist zusammen mit Ende 2 der Platine 3 in die Kunststoff-Umhüllung 10 eingebettet, wobei diese das Primärgehäuse bildet. Die Kunststoff-Umhüllung 10 (sowie ein großer Teil) von Leiterplatte 3 sind von der Kunststoffumspritzung 13 als Außengehäuse umschlossen, welche im Bereich des Endes 18 eine Öffnung zur Durchführung der Leitung für die als Stecker ausgebildeten äußeren Anschlußkontakte 8, 9 aufweist. Durch Verkürzung der Leiterplatine 3 ist es möglich, einen Temperatursensor beispielsweise in einem üblichen Halbleitergehäuse einzuordnen, wie es nachfolgend anhand der Figuren 2a und 2b dargestellt ist.

Figur 2a zeigt in einer perspektivischen Darstellung einen Temperatursensor gemäß Figur 1a, 1b, dessen Kunststoff-Umspritzung 13 als TO-Gehäuse ausgebildet ist, wie es im Bereich von Halbleiterelementen üblicherweise Verwendung findet; mit TO werden Transistorgehäuse für die Leiterplattenbestückung bezeichnet, wobei die äußeren Anschlußkontakte 8, 9 in Form von langgestreckten Stiften 8', 9' ausgebildet sind, die zum Auflöten auf übliche Leiterplatinen geeignet sind; es ist jedoch auch möglich, die Stifte 8', 9' in Stecksockel einzuführen, um ggf. eine rasche Auswechselbarkeit zu erzielen.

Weiterhin zeigt Figur 2b eine Kunststoff-Umspritzung 13, welche als sogenannten SOT-Gehäuse ausgebildet ist; solche SOT-Gehäuse dienen zur Leiterplattenbestückung in SMD-Technik, wobei die nach außen geführten Kontakte 8, 9 mit ihren Lötflächen 8", 9" direkt auf Kontaktflächen von Leiterplatten der SMD-Technik aufgelötet werden können. Solche SOT-Gehäuse sind insbesondere für Miniaturisierungszwecke geeignet.

Bei einem Gehäuse vom Typ SOT 223 ist der Temperatursensor auf einer Kühlfahne angebracht, die sonst üblicherweise einen Leistungstransistor kühlt. Durch diese Ankopplung an die Außenwelt oder das umgebende Medium reagiert der Sensor bei Temperaturwechsel sehr schnell, d.h. er hat eine sehr geringe Wärmeträgheit.

## Patentansprüche

1. Temperatur-Sensor mit einem Meßwiderstand aus einem Substrat mit elektrisch isolierender Oberfläche und darauf befindlicher Widerstandsschicht, wobei der Meßwiderstand von einer Umhüllung aus temperaturbeständigem Kunststoff umgeben ist, durch die Anschlußleiter des Meßwiderstandes geführt sind, **dadurch gekennzeichnet, daß** die Umhüllung (10) als Primärgehäuse dient, das zusammen mit dem eingebetteten Meßwiderstand (1) von einer zusätzlichen Kunststoff-Umspritzung (13) als Außengehäuse umgeben ist, wobei die Anschlußleiter (4, 5) durch die Kunststoff-Umspritzung (13) nach außen geführt sind und der Sensor gegenüber der Umgebungsatmosphäre versiegelt ist.

2. Temperatur-Sensor nach Anspruch 1, **dadurch gekennzeichnet, daß** der Meßwiderstand (1) als SMD-Teil ausgebildet und mittels Kunststoff-Umhüllung (10) gegenüber seiner Umgebung versiegelt ist, wobei wenigstens zwei Anschluß-Leiter (4,5) zwischen Meßwiderstand (1) und äußeren Anschlußkontakten (8,9) gas- und flüssigkeitsdicht durch Kunststoff-Umhüllung (10) und Kunststoff-Umspritzung (13) geführt sind.

3. Temperatur-Sensor nach Anspruch 2, **dadurch gekennzeichnet, daß** die äußeren Anschlußkontakte (8, 9) als Lötkontakte für SMD-Montage ausgebildet sind.

4. Temperatur-Sensor nach Anspruch 2, **dadurch gekennzeichnet, daß** der Meßwiderstand (1) auf eine Platine (3) gelötet ist, die an ihrem dem Meßwiderstand abgewandten Ende wenigstens einen elektrischen Anschluß aufweist, der mit einem als äußeren Anschlußkontakt (8,9) ausgebildeten Stecker in Form eines Stiftes verbunden ist.

5. Temperatur-Sensor nach einem der Ansprüche 1 bis 4, **dadurch gekennzeichnet, daß** die Kunststoff-Umhüllung (10) aus Silikonlack besteht.

6. Temperatur-Sensor nach einem der Ansprüche 1 bis 5, **dadurch gekennzeichnet, daß** die äußere Kunststoff-Umspritzung (13) aus duroplastischem Kunststoff besteht.

7. Temperatur-Sensor nach einem der Ansprüche 1 bis 6, **dadurch gekennzeichnet, daß** die äußere Kunststoff-Umhüllung (13) als TO-Gehäuse ausgebildet ist, das im Bereich seiner Anschluß-Oberfläche (20) äußere Anschlußkontakte aufweist, die als Stifte (8', 9') ausgebildet sind.

## Claims

1. Temperature sensor comprising a measuring resistor made of a substrate with an electrically insulating surface and a resistive layer located thereon, the measuring resistor being surrounded by a covering of heat-resistant plastics material, through which supply leads of the measuring resistor are guided, **characterised in that** the covering (10) serves as a primary housing which, together with the embedded measuring resistor (1), is surrounded by an additional plastics material sheathing (13) as the external housing, the supply leads (4, 5) being guided outwardly through the plastics material sheathing (13) and the sensor being sealed with respect to the ambient atmosphere.

2. Temperature sensor according to claim 1, **characterised in that** the measuring resistor (1) is designed as an SMD part and is sealed with respect to its environment by means of a plastics material covering (10), at least two supply leads (4, 5) being guided in a gas-tight and liquid-tight manner through the plastics material covering (10) and the plastics material sheathing (13) between the measuring resistor (1) and outer terminal contacts (8, 9).

3. Temperature sensor according to claim 2, **characterised in that** the outer terminal contacts (8, 9) are designed as soldering contacts for SMD assembly.

4. Temperature sensor according to claim 2, **characterised in that** the measuring resistor (1) is soldered onto a board (3) which, at its end remote from the measuring resistor, has at least one electrical terminal, which is connected to a plug in the form of a pin and designed as the outer terminal contact (8, 9).

5. Temperature sensor according to any one of claims 1 to 4, **characterised in that** the plastics material sheathing (10) consists of silicone varnish.

6. Temperature sensor according to any one of claims 1 to 5, **characterised in that** the outer plastics material sheathing (13) consists of thermosetting plastics material.

7. Temperature sensor according to any one of claims 1 to 6, **characterised in that** the outer plastics material sheathing (13) is formed as a TO housing which comprises, in the region of its terminal surface (20), outer terminal contacts which are formed as pins (8', 9').

## Revendications

1. Capteur de température comportant une résistance de mesure constituée par un substrat possédant une surface électriquement isolante et une couche résistive située sur ce substrat, la résistance de mesure étant entourée par une enveloppe formée d'une matière plastique résistante à la température et dans laquelle s'étendent les conducteurs de raccordement de la résistance de mesure, **caractérisé en ce que** l'enveloppe (10) est utilisée comme boîtier primaire, qui, conjointement avec la résistance de mesure enrobée (1), est entourée par un enrobage supplémentaire en matière plastique moulée par injection (13) en tant que boîtier extérieur, les conducteurs de raccordement (4, 5) sortant à l'extérieur à travers l'enrobage de matière plastique moulée par injection (13), et le capteur étant scellé vis-à-vis de l'atmosphère alentour.

2. Capteur de température selon la revendication 1, **caractérisé en ce que** la résistance de mesure (1) est agencée sous la forme d'un élément SMD et est scellée vis-à-vis de l'environnement au moyen de l'enveloppe en matière plastique (10), au moins deux conducteurs de raccordement (4, 5) disposés entre la résistance de mesure (1) et des contacts extérieurs de raccordement (8, 9) traversant, d'une manière étanche aux gaz et aux liquides, l'enveloppe en matière plastique (10) et l'enrobage en matière plastique moulée par injection (13).

3. Capteur de température selon la revendication 2, **caractérisé en ce que** les contacts extérieurs de raccordement (8, 9) sont agencés sous la forme de contacts à braser pour le montage SMD.

4. Capteur de température selon la revendication 2, **caractérisé en ce que** la résistance de mesure (1) est fixée par brasage sur une platine (3), qui comporte, au niveau de son extrémité située à l'opposé de la résistance de mesure, au moins une borne électrique qui est reliée à un connecteur agencé sous la forme d'un contact extérieur de raccordement (8, 9), en forme de tige.

5. Capteur de température selon l'une des revendications 1 à 4, **caractérisé en ce que** l'enveloppe en matière plastique (10) est formée par une laque silicone.

6. Capteur de température selon l'une des revendications 1 à 5, **caractérisé en ce que** l'autre enrobage en matière plastique moulée par injection (13) est formé d'une matière plastique thermodurcissable.

7. Capteur de température selon l'une des revendications 1 à 6, **caractérisé en ce que** l'enveloppe extérieure en matière plastique (13) est agencée sous la forme d'un boîtier TO, qui comporte, dans la zone de sa surface de raccordement (20), des contacts extérieurs de raccordement qui sont agencés sous la forme de tiges (8', 9').
